# EUROPEAN PATENT APPLICATION

(11) **EP 0 776 865 A1**
(43) Date of publication of application: **04.06.1997**
(21) Application number: 96105544.9
(22) Date of filing: 09.04.1996
(51) Int. Cl.: C03B 23/03, C03B 35/24, C03B 27/044, C03B 27/048

(54) **A process and apparatus for bending and tempering glass in a horizontal position, with sideways movement**

(30) Priority: 29.11.1995 IT MI952491
(71) Applicant: Leone, Massimo, 66054 Vasto (Chieti) (IT)
(72) Inventor: Leone, Massimo, 66054 Vasto (Chieti) (IT)
(74) Representative: Zavattoni Gusmeroli, Maria Chiara

(57) **Abstract**

On leaving a heating furnace, a heated glass sheet (7) supported on a roller conveyor (14) is delivered to a lower bending fixture (23) made of sections, for example through lowering of the roller conveyor, and is bent against the upper bending fixture (15). The sheet (7), resting on the lower fixture, is translated sideways to a tempering station (B) where it is applied to an upper support (31) of the tempering station because of the differential pressure between upper (42) and lower blowers (41). Resting against the upper support it is translated to a loading station (C) where the sheet, by now cooled, is dropped to rest on a discharge roller conveyor(53) and evacuated.

## Description

The invention relates to bending and tempering glass sheets leaving a heating furnace. For use in glass panes for windows of vehicles and/or other applications, for furniture or electrical appliances or the like, for which bent and tempered glass sheets are required, the sheets are cut to shape beforehand and the edges are ground. At present the bending and tempering operation is carried out according to procedures and equipment known to the art, of which those considered most important are briefly summarized below.

The present glass bending and tempering systems, with particular reference to glass panes or glazing closures for motor vehicles, are divided into two major families: tempering systems in which the glass sheet is in a vertical position and tempering systems in which the glass sheet is in a horizontal position.

Vertical tempering systems have been almost completely abandoned because the glass sheets show unsightly marks of the pliers needed to support the glass in a vertical position.

Among the horizontal glass bending and tempering systems, the main ones in use will be mentioned below.

A US patent assigned to L.O.F., now in public use and widely applied, teaches a flat roller conveyor downstream of a heating oven to convey the glass sheet that is to be bent, said roller conveyor or bed comprising rollers crosswise to the direction of travel of the glass sheet, said rollers being supported and connected to each other at one end and the other. A lower bending fixture is formed in sections such that they can be inserted between the rollers of the roller conveyor and has a vertical movement so that it can pick up a sheet of glass by rising and apply it to a fixed upper male bending mould. In the L.O.F. patent the sheet of glass thus moulded and still hot is then left on the flat roller conveyor through lowering of the lower fixture. The curved sheet is then conveyed by the roller conveyor or along it, always in a direction at right angles to the extension of the rollers, to a tempering station and thence to an evacuation station. In the systems built according to the L.O.F. patent it has been found that resting the curved glass sheet while still hot on a flat surface is not an ideal situation and in actual fact the plant has yielded good results only for limited bending for side windows of motor vehicles, whereas it does not yield good results as regards more pronounced or complex bending for rear windows.

The state of the art also comprises two US patents in the name of Glass tech; the first discloses a bending process for glass sheets in which the sheet is given a first or total bend inside the heating oven while it is resting on a continuous, that is to say unbroken, lower bending mould. With the Glasstech system both side and rear window panes can be produced but only for normal side window bends and simple rear window bends, with acceptable production costs but with a quality that is increasingly less accepted by car manufacturers.

With a procedure and equipment according to the other Glasstech patent, is possible to produce both rear and side window panes of considerable difficulty, even to good standards of quality, but with very high production costs, both because of the low production rates and because of the high costs of the specific equipment for each model and because of the long idle times of the plant for changes of model. In fact this system has the bending stage carried out inside the heating furnace, with the consequent need for two fixtures, both with high costs.

The state of the art also comprises an Italian patent in the name of SIV (Società Italiana Vetro) which describes an apparatus comprising various moulds arranged in a loop or carousel, that are moved according to a quadrangular carousel, that is to say the moulds enter perpendicularly to the axis of the furnace, beneath the roller conveyor immediately downstream of the furnace itself, then advance in a direction parallel to the axis of the furnace. In order to set down the sheet of glass on the mould, the roller conveyor, which is completely within the lower female mould (consisting only of the edge) descends until it disappears beneath the whole mould itself, thus allowing the mould to leave in the other direction whilst a second mould enters from the side before the roller conveyor rises into position again to receive a second sheet. The SIV system is suitable for rear or side window panes of medium difficulty; production costs can be considered acceptable but the standard of quality of the system is not one of the best, since the number of moulds used for production is between 4 and 8, and therefore the scatter of the natural deviations in shape is widened.

Other bending systems for sheets of glass are not suitable for large mass production or do not provide an adequate standard of quality.

The aim of the present invention is to provide a process and an apparatus for bending and tempering sheets of glass that are suitable for production of rear or side window panes even with complex bends; that use a single bending fixture for each model and thus keep the scatter of size tolerances as low as possible; that achieve high production rates, require relatively low investment costs and have lower production costs than the systems currently in use.

The above aims are achieved with a procedure as stated in claim 1 and an apparatus as stated in claim 4.

According to the invention, a glass sheet bent between a lower bending fixture in sections and an upper bending fixture is moved to a tempering station supported on the lower bending fixture and with a movement crosswise or at right angles to the direction in which the sheet leaves the furnace. In the tempering station, the sheet is applied to an upper movable support through application of differential pressure by blowers.

The process and apparatus according to the invention have considerable advantages, in particular they are suitable for the production of rear and side window panes even with complex curvatures; they allow a single bending fixture to be used for each model and thus to keep the scatter of the size tolerances at a lower level. The apparatus can be mounted on a system that also provides for a normal technology, for example of the type described in the above mentioned L.O.F. patent or others of a similar type and it is possible to pass from one technology to the other in a very short time. In this way both investment costs and production costs can be kept low and at the same time the highest production rates compatible with the production difficulties of the specific product can be employed.

Moreover, the invention is able to produce rear window panes or similar window panes of great difficulty at higher production rates than with the systems built according to the mentioned patents. It is therefore able to ensure much lower production costs and installation and amortization costs than the other systems. Moreover, since the invention provides for the glass to be bent outside the heating furnace, it can be built with fixtures of normal difficulty and cost.

The invention will be described below in more detail with reference to the attached drawings which illustrate a currently preferred embodiment and in which:
Figure 1 is a partially diagrammatic side elevational view of the apparatus;
Figure 2 is a plan view of the apparatus in Figure 1.

With reference to the figures, A therein indicates a moulding station downstream from the heating furnace, B a tempering station and C a discharge station.

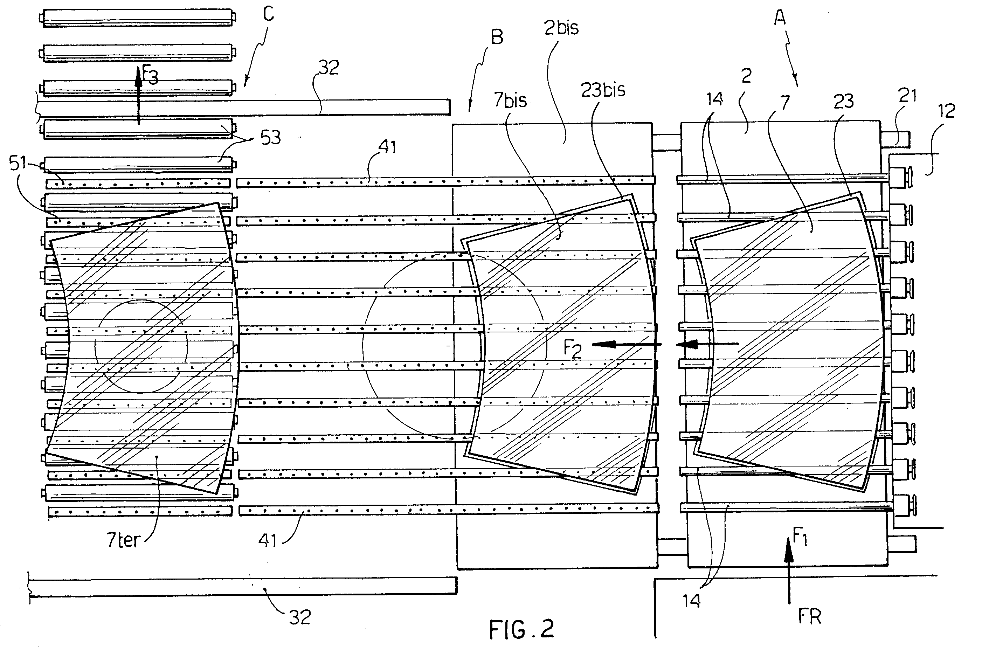

A press trolley or carriage 1 comprises a mast structure 11 that supports an "elevator" 12 and an upper bending fixture, or upper press, 15. The elevator 12 comprises a slider vertically movable on the mast of the press trolley and supports a series of rollers 14 with horizontal axes, which are cantilevered and disposed as a continuation of the roller conveyor or roller bed of a heating furnace FR (Fig. 2), so that they can receive the sheets of glass, which, proceeding on the furnace rollers, leave the furnace with continuity, in the direction indicated by arrow F1, once the stage of heating to a suitable temperature for bending has been completed. The upper fixture 15 is supported, vertically mobile or fixed, on a horizontal arm 16 of the trolley. The rollers 14 are rotated in unison, each around its own axis, in a per se known manner which is therefore not illustrated here. The vertical movements of the upper fixture 15 and of the elevator 12, like the rotation of the rollers 14 and the action of valves, not shown, for operation of the tempering and discharge pressures, are driven by motors controlled by a special computerized processor that are not shown in the figures.

A press shuttle 2 can slide in the direction of the arrow F2, transversal (at right angles) to F1, on fixed horizontal guides 21, parallel to the rollers 14, and supports a series of vertical frames 22, which in turn support the lower pressing fixture 23. The lower pressing fixture comprises sectors spaced out from each other so that they can be interleaved with the rollers 14 of the elevator 12.

A flat glass sheet 7, leaving the heating furnace, is carried on rollers 14 and is stopped on the rollers 14 in the pressing position; in said position, the sheet 7 is situated above the lower pressing or bending fixture 23. At this point the elevator 12 comes down, depositing the hot sheet on the sectors of the lower press fixture 23 while the upper press fixture 15 comes down until it completely moulds (bends) the sheet 7 against the fixture 23, and then rises again. At this point the press shuttle 2 with the lower fixture 23 and the bent sheet 7, now indicated as 7bis, moves sideways (arrow F2) with respect to the direction of travel F1 of the glass in the furnace, to move into the tempering station B. Immediately after this movement, in the station A the elevator 2 moves upwards again to bring the rollers 14 back in line with the furnace rollers and thus allow the arrival of a second sheet of glass.

The tempering station B comprises lower 41 and upper 42 tempering blowers, made with "blades" at the top of which holes are provided or special nozzles are applied for delivery of air at the desired pressures, said blades being spaced out from each other so as to allow entry of the frames 22 of the press shuttle 2. It also comprises a tempering shuttle 3, that can be translated on horizontal rails or guides 32 in the same direction stated above, indicated by F2. The shuttle 3 carries upper tempering shuttle supports 31, having a complementary shape to that of the lower press fixture 23. When the press shuttle 2 enters the tempering section (position 2 bis) the blowers 41 and 42 are supplied with air with the necessary pressure for tempering (abrupt cooling of the hot glass), in such a way that the pressure head of the lower blower 41 is such as to push the bent sheet of glass 7 bis upwards, bringing it to rest against the supports 31 of the tempering shuttle 3.

The press shuttle 2 bis, freed of the bent glass sheet, returns to the position beneath the rollers 14.

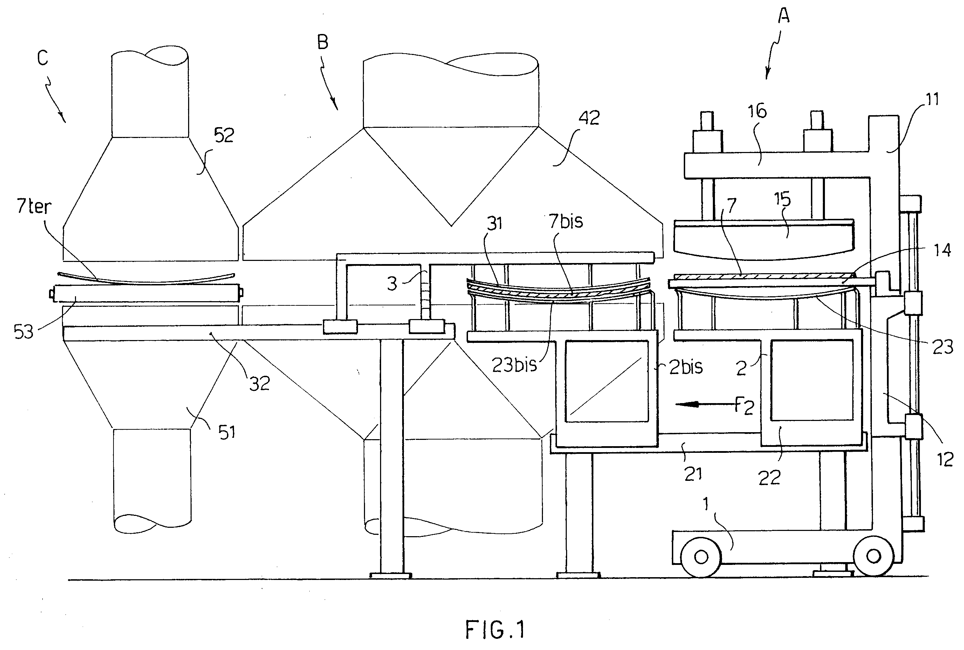

The tempering shuttle 3 with the bent sheet moves slowly on its guides 32 between the tempering blowers 41 and 42 to complete the tempering stage. When the tempering stage has been completed, the tempering shuttle 3 makes a traverse (in the direction of arrow F2) into the discharge section C. The discharge section C comprises discharge blowers 51, lower, and 52, upper, made with blades spaced out from each other, and a discharge roller conveyor or bed 53 interposed between them, the rollers of which, lying parallel to the rollers 14 of the moulding section roller conveyor or bed, are rotated around their own axes. After the shuttle 3 has arrived completely, the air pressures in the discharge section blowers 51 and 52 are reversed so that they drop the sheet of glass, by now cool, from the tempering shuttle 3 onto the discharge roller conveyor 53, the rollers of which are positioned in the middle of the lower discharge blower 51. The tempering shuttle 3, once freed of the sheet, returns to the start of tempering position (in Figure 1) in order to be able to receive a next sheet of glass from the press shuttle 2. The bent, tempered sheet, indicated by 7, is evacuated by the rollers 53 in a direction at right angles to the plane of the sheet in Figure 1, i.e. in the direction shown by the arrow F3 in Figure 2.

The system is completed by a control panel controlled by a computerized processor that provides for all the operations described above to be carried out completely automatically and with the necessary accuracy.

Variants on the invention are foreseen. For example the equipment can be made with conveyor belts instead of the tempering shuttle 31; said per se known belts engage the sheet with their lower lengths. In the bending station it is possible for the lower bending fixture 23 to have a vertical movement, in place of the vertical movement of roller conveyor or in addition to it.

Further embodiments can be thought of by an expert in the field without departing from the scope of the present invention.

## Claims

1. A glass sheet bending and tempering process comprising the steps of: heating a glass sheet in a heating furnace, bringing the hot glass sheet out of said furnace in a first direction of travel (F1) on a roller conveyor or bed, the rollers of which are set in rotation, shaping the hot sheet between a lower bending fixture in sections and an upper bending fixture, characterized in that it comprises the further steps of leaving the bent sheet resting on the lower bending fixture; translating said lower bending fixture with the sheet on it to a tempering station in a direction (F2) perpendicular to the direction in which the sheet leaves the furnace.

2. A process according to claim 1 characterized in that it comprises the further step of applying the bent sheet, in the tempering station, to an upper support, through application of a differential air pressure.

3. A process according to claim 2 characterised in that it comprises the further steps of moving the bent and tempered sheet to a discharge station (C), delivering it to a discharge conveyor and evacuating it.

4. An apparatus for bending and tempering glass sheets comprising, downstream of a heating furnace, a roller conveyor or bed to convey the sheets, comprising parallel rollers (14) revolving around their own axes; a lower bending fixture (23) made of sections suitable to be interleaved with the rollers of the roller conveyor; an upper bending fixture (15) above the roller conveyor, characterised in that said rollers (14) are cantilever supported on a support (12) and also comprises means for a mutual vertical movement between said lower bending fixture (23) and said roller conveyor (14); so that said fixture and said roller bed can assume a condition in which the fixture is beneath the roller conveyor or bed and a condition in which the fixture has a sheet supporting surface above the roller conveyor; further in that it comprises means for moving the lower bending fixture parallel to the rollers (direction F2).

5. An apparatus according to claim 4 characterized in that the roller conveyor or bed (14) is vertically movable.

6. An apparatus according to claim 4, characterised in that the lower bending fixture (23) is vertically movable.

7. An apparatus according to claim 4 characterised in that the upper bending fixture (15) is vertically movable.

8. An apparatus according to claim 4 characterised in that it comprises a tempering station (B) comprising a lower tempering blower (41) and an upper tempering blower (42) having openings with spaced out blades, and a tempering shuttle (3) that can be moved along the blades and carries an upper shuttle support (31).

9. An apparatus according to claim 8 characterised in that said tempering blowers provide a differentiated air pressure, greater for the lower blower (41).

10. An apparatus according to claim 8 characterised in that it further comprises an evacuation or discharge section (C), comprising bladed discharge blowers (51, 52) and an interposed discharge roller conveyor or bed (53).

11. An apparatus according to claim 10 characterised in that a stroke of the tempering shuttle (3) extends to the discharge roller conveyor (53).

12. A process as described in the preceding description.

13. An apparatus as described in the preceding description and illustrated in the attached drawings.
